# EUROPÄISCHE PATENTSCHRIFT

(11) **EP 1 174 305 B1**
(45) Veröffentlichungstag und Bekanntmachung des Hinweises auf die Patenterteilung: **27.10.2004**
(21) Anmeldenummer: 01117196.4
(22) Anmeldetag: 16.07.2001
(51) Int. Cl.: B60N 2/433

(54) **Verriegelungsvorrichtung für einen Fahrzeugsitz**
Locking device for a vehicle seat
Dispositif de verrouillage pour un siège de véhicule

(30) Priorität: 20.07.2000 DE 10035258
(43) Veröffentlichungstag der Anmeldung: 23.01.2002
(73) Patentinhaber: KEIPER GmbH & Co. KG, 67657 Kaiserslautern (DE)
(72) Erfinder: Boltze, Wolfgang, 67633 Kaiserslautern (DE); Diehl, Konrad, 66450 Bexbach (DE); Wittig, Werner, Dr., 67722 Winnweiler (DE)
(74) Vertreter: Patentanwälte Hosenthien-Held und Dr. Held

(56) Entgegenhaltungen:
- EP-A- 0 876 938
- DE-A- 19 902 778
- FR-A- 2 649 942
- US-A- 4 634 182
- US-A- 5 733 008

## Beschreibung

Die Erfindung betrifft eine Verriegelungsvorrichtung für einen Fahrzeugsitz mit den Merkmalen des Oberbegriffs des Anspruches 1 und einen Fahrzeugsitz mit den Merkmalen des Oberbegriffs des Anspruches 8, (siehe z.B. US 5, 733, 008 A).

Eine bekannte Verriegelungsvorrichtung dieser Art ist Teil eines Gelenkbeschlags für einen Kraftfahrzeugsitz. Die Neigungseinstellung erfolgt zwischen einem sitzteilfesten Beschlagunterteil und einem lehnenfesten Beschlagoberteil. Das Beschlagunterteil und das Beschlagoberteil sind - außer beim Schwenken der Rückenlehne - mittels einer am Beschlagunterteil gelagerten Klinke verriegelt. Die Klinke wird durch ein vorgespanntes, exzentrisches Spannelement gesichert. Ein Fangelement mit einer konzentrischen Fangfläche dient zur Abstützung der Klinke im Crashfall. Um zu vermeiden, daß der Abstand zwischen der Klinke und dem Fangelement vor allem bei feingestufter Neigungseinstellung dazu führt, daß die Crashbelastung nicht mehr aufgenommen werden kann, müssen die die Fertigungstoleranzen sehr gering sein.

Aus der DE 199 02 778 A1 ist eine Verriegelungsvorrichtung bekannt, bei der neben der Klinke und zum Spannelement noch ein Nockenelement vorgesehen ist, welches zusätzlich die Klinke klemmt. In der e.g. US 5,733,008 A wird eine Verriegelungsvorrichtung für einen Lehnenbeschlag, bei außer der Klinke und einem sie sichernden Nocken als Spannelement noch ein zweites, gezahntes, mit dem zweiten Zahnelement zusammenwirkendes Verriegelungselement aufweist, welches mittels eines Stoßdämpfers an die Lehne gekoppelt ist und im Crashfall ein Öffnen der Verriegelungsvorrichtung verhindert.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche. Ein Fahrzeugsitz mit einer solchen Verriegelungsvorrichtung ist Gegenstand des Anspruches 8.

Dadurch, daß das Fangelement wenigstens zwei unterschiedliche Fangflächen aufweist, kann auch bei größeren Toleranzen die Funktion des Fangelementes gewährleistet und der Überdeckungsverlust der Verzahnung minimiert werden. Es können zwei oder mehr Fangflächen vorgesehen sein. Die vorzugsweise konzentrisch oder zumindest näherungsweise konzentrisch zur Schwenkachse des Fangelementes ausgebildeten Fangflächen sind vorzugsweise benachbart zueinander am Fangelement angeordnet, d.h. liegen im Anschluß aneinander, haben vorzugsweise kleine Zentriwinkel, d.h. mit einer Winkel von wenigen Grad, und bilden vorzugsweise eine konvexe Kontur am Fangelement. Jede dieser Maßnahmen erhöht die Wahrscheinlichkeit, daß eine der Fangflächen den geringsten Abstand zum ersten Zahnelement einnimmt, d.h. parallel zu einer Anlagefläche desselben ausgerichtet ist. Erfindungsgemäß trifft dies für genau eine Fangfläche pro Fangelement zu, die im Crashfall mit einer Anlagefläche des ersten Zahnelementes zusammenwirkt.

In bevorzugter Ausführungsform weisen die zwei oder mehr Fangflächen einen unterschiedlichen Abstand zu der Schwenkachse des Fangelementes auf. Durch eine leicht exzentrische Form des Fangelementes können zusätzlich radiale Toleranzen ausgeglichen werden. Dabei können zwischen den Fangflächen Stufen vorgesehen sein, welche die exzentrische Form des Fangelementes etwas verstärken.

Ein erfindungsgemäßer Fahrzeugsitz, insbesondere ein Kraftfahrzeugsitz, weist wenigstens einen Fahrzeugsitzeinsteller oder eine Sitzbefestigung am Fahrzeugboden mit einer erfindungsgemäßen Verriegelungsvorrichtung auf. Ein solcher Fahrzeugsitzeinsteller kann beispielsweise ein Rastbeschlag mit kombinierter Neigungseinstellung und Freischwenkfunktion, wobei die Verriegelungsvorrichtung in beiden Fällen entriegelt wird, oder ein beliebiger Gelenkbeschlag sein, beispielsweise ein Taumelbeschlag, bei dem die Verriegelungsvorrichtung nur beim Freischwenken entriegelt wird. Der Fahrzeugsitzeinsteller kann gegebenenfalls auch ein Längseinsteller, Höheneinsteller oder Neigungseinsteller sein. Die erfindungsgemäße Verriegelungsvorrichtung kann auch für die Sitzbefestigung verwendet werden, mit welcher der Fahrzeugsitz am Fahrzeugboden befestigt wird. Als Zahnelemente können schwenkbare oder schwimmend gelagerte Klinken mit seitlicher Verzahnung, verschiebbare Riegel mit einer Verzahnung am vorderen Ende, Zahnräder mit Außenverzahnung, Hohlräder mit Innenverzahnung oder geeignete Kombinationen derselben eingesetzt werden.

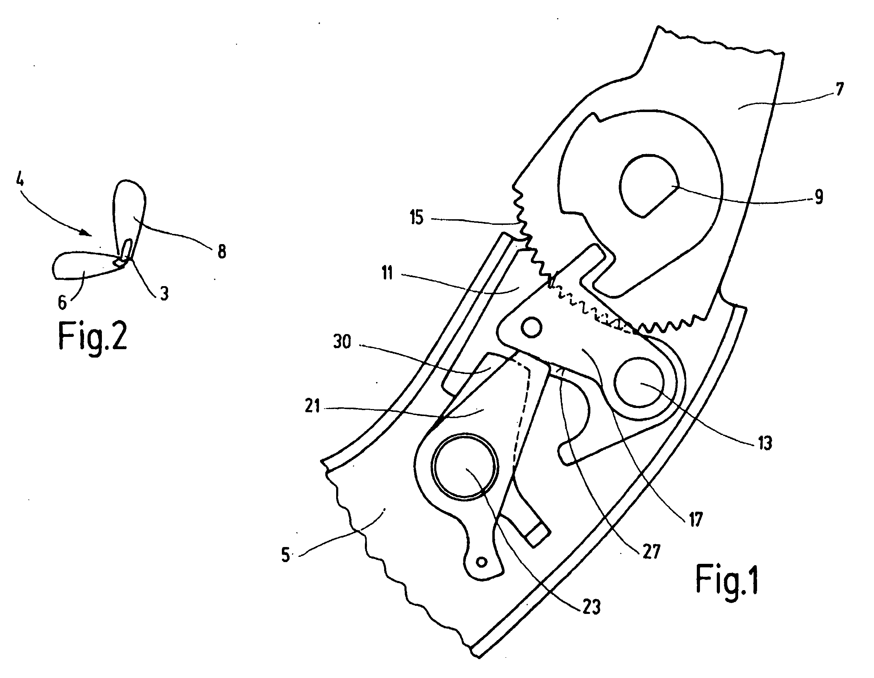

Im folgenden ist die Erfindung anhand zweier in der Zeichnung dargestellten Ausführungsbeispiele näher erläutert. Es zeigen
- Fig. 1: eine nur teilweise dargestellte, seitliche Ansicht des ersten Ausführungsbeispiels in einem verriegelten Zustand,
- Fig. 2: eine schematische Seitenansicht eines Fahrzeugsitzes mit dem ersten Ausführungsbeispiel,

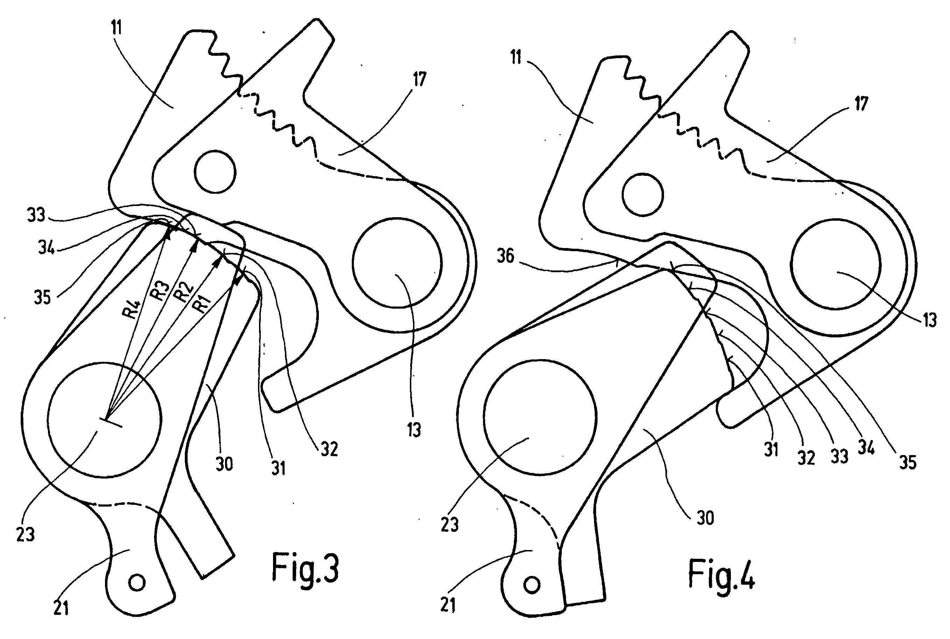

- Fig. 3: einen Ausschnitt aus einer Fig. 1 entsprechenden Darstellung des ersten Ausführungsbeispiels in einer Stellung nach einem Crash,
- Fig. 4: eine Fig. 3 entsprechenden Darstellung des ersten Ausführungsbeispiels in geöffneter Stellung, und
- Fig. 5: einen Schnitt durch das zweite Ausführungsbeispiel.

Das erste Ausführungsbeispiel betrifft eine Verriegelungsvorrichtung 1 für einen Gelenkbeschlag 3 eines Fahrzeugsitzes 4, der in einem Kraftfahrzeug eingesetzt wird. Die Anordnung des Fahrzeugsitzes 4 im Kraftfahrzeug und dessen normale Fahrtrichtung definieren die nachfolgenden Richtungsangaben. Der Gelenkbeschlag 3 ist als Rastbeschlag ausgebildet, kann aber auch als Taumelbeschlag ausgebildet sein. Der Gelenkbeschlag 3 umfaßt ein Beschlagunterteil 5, das mit einem Sitzteil 6 des Fahrzeugsitzes 4 verbunden ist, und ein Beschlagoberteil 7, welches mit einer Rückenlehne 8 des Fahrzeugsitzes 4 verbunden ist. Die beiden Beschlagteile 5 und 7 sind während eines Freischwenkvorganges relativ zueinander um eine Lehnendrehachse 9 schwenkbar, im Ausführungsbeispiel auch während einer Neigungseinstellung der Rückenlehne 8, und ansonsten durch die Verriegelungsvorrichtung 1 miteinander verriegelt.

Zum Verriegeln ist einerseits als ein erstes Zahnelement eine schwenkbare Klinke 11 mittels eines ersten Bolzens 13 am Beschlagunterteil 5 angelenkt, und andererseits weist das Beschlagoberteil 7 konzentrisch zur Lehnendrehachse 9 als ein zweites Zahnelement einen beschlagoberteilfesten Zahnkranz 15 auf. Im verriegelten Zustand der Verriegelungsvorrichtung 1 greift die Klinke 11 mit einer Verzahnung, die am freien Ende der Klinke 11 vorgesehen ist, in die Verzahnung des Zahnkranzes 15 ohne Selbsthemmung ein. Um den als Lehnenneigungseinsteller eingesetzten Gelenkbeschlag 3 einstellen zu können oder um die Rückenlehne 8 für den Einstieg zur Rücksitzbank freischwenken zu können, kann die Klinke 11 vom Zahnkranz 15 weggeschwenkt werden. Der Klinke 11 ist ein drehfestes oder einstückig mit ihr verbundenes Steuerstück 17 zugeordnet.

Um die Klinke 11 in Eingriff mit dem Zahnkranz 15 zu halten, ist ein Spannelement 21 vorgesehen, welches mittels eines zweiten Bolzens 23 am Beschlagunterteil 5 angelenkt ist. Das schwenkbare Spannelement 21 ist in Richtung auf die Klinke 11 zu federbelastet, wobei im Schwenkbereich des freien Endes des Spannelementes 21 eine Spannfläche 27 der Klinke 11 angeordnet ist, welche auf der vom Zahnkranz 15 abgewandten Seite des Steuerstücks 17 ausgebildet ist, aber sich alternativ an der Klinke 11 befinden könnte. Im verriegelten Zustand liegt das am freien Ende mit einer exzentrischer Kontur versehene Spannelement 21 mit Spannung und außerhalb des Selbsthemmungsbereiches an der Spannfläche 27 an, so daß die Klinke 11 im Zahnkranz 15 gehalten wird.

Ein Fangelement 30, welches um den zweiten Bolzen 23 schwenkbar gelagert ist, ist getrennt vom Spannelement 21 ausgebildet, kann aber von diesem mitgenommen werden. Das Fangelement 30 weist an seinem freien Ende nebeneinander eine erste Fangfläche 31, deren Abstand zum zweiten Bolzen 23 R1 ist, eine zweite Fangfläche 32, deren Abstand zum zweiten Bolzen 23 R2 ist, eine dritte Fangfläche 33, deren Abstand zum zweiten Bolzen 23 R3 ist, eine vierte Fangfläche 34, deren Abstand zum zweiten Bolzen 23 R4 ist, und eine fünfte Fläche 35 auf. Die fünfte Fläche 35 begrenzt den Klinkenhub im geöffneten Zustand. Durch die unterschiedlichen Abstände R1, R2, R3 und R4 sind kleine Stufen zwischen den zugehörigen Fangflächen 31, 32, 33 und 34 ausgebildet. Die tangential bezüglich des zweiten Bolzens 23 angeordneten vier Fangflächen 31, 32, 33 und 34 sind konzentrisch zueinander um den zweiten Bolzen 23 gekrümmt. Die vier Fangflächen 31, 32, 33 und 34 stehen jeweils in einem Winkel von etwa 6° bis 9°, vorzugsweise 8°, zueinander. Das gegenüber dem Spannelement 21 federbelastete Fangelement 30 ist mittels Mitnehmeranschlägen oder Schlitz-Zapfen-Führungen an das Spannelement 21 gekoppelt, so daß das Fangelement 30 beim Entriegeln der Verriegelungsvorrichtung 1 das Spannelement 21 mitnehmen kann.

Im normalen, verriegelten Zustand liegt eine der vier Fangflächen 31, 32, 33 und 34 mit geringem Abstand einer Anlagefläche 36 der Klinke 11 gegenüber. Fertigungsbedingte Toleranzen entscheiden letztendlich darüber, welche der vier Fangflächen 31, 32, 33 und 34 in unmittelbarer Nachbarschaft der Anlagefläche 36 liegt und näherungsweise parallel zu dieser steht. Im Crashfall übt die Rückenlehne 8 ein Moment auf das Beschlagoberteil 7 aus, welches über den Zahnkranz 15 ein öffnendes Moment auf die Klinke 11 ausübt, welche wiederum das Spannelement 21 entgegen seiner Federbelastung zurückdrückt. Nun kommt die Anlagefläche 36 in Anlage mit einer der Fangflächen 31, 32, 33 oder 34. Aufgrund der zumindest näherungsweise vorliegenden Konzentrizität der Fangflächen 31, 32, 33 und 34 kann die Klinke 11 kein öffnendes Moment auf das Fangelement 30 ausüben, so daß die Klinke 11 und das Fangelement 30 in dieser Stellung verbleiben, das Fangelement 30 also die Klinke 11 abstützt. Zugleich befindet sich die Klinke 11 noch in Eingriff mit dem Zahnkranz 15, so daß die Verriegelungsvorrichtung 1 verriegelt bleibt.

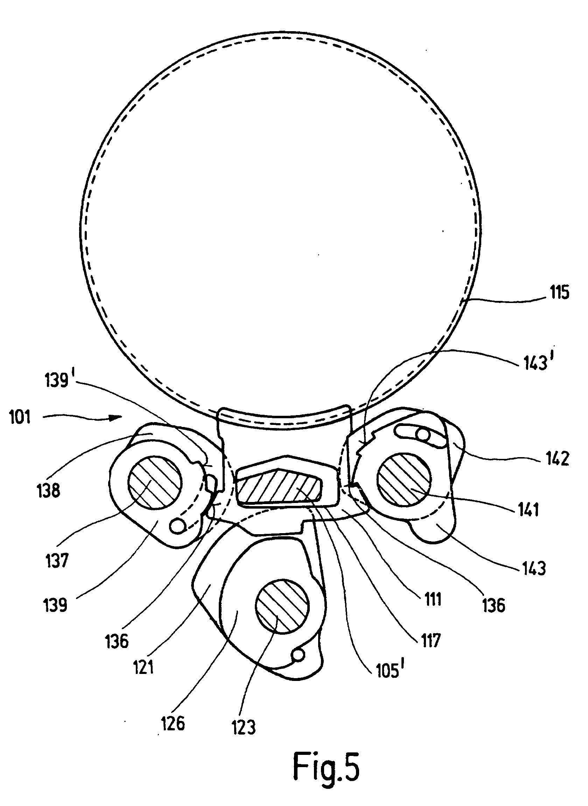

Im zweiten Ausführungsbeispiel ist eine erfindungsgemäße Verriegelungsvorrichtung 101 für einen als Rastbeschlag ausgebildeten Gelenkbeschlag vorgesehen, um diesen stufenlos verriegeln zu können. Bauteile, welche Bauteilen des ersten Ausführungsbeispiels gleichen oder die gleiche Funktion wie diese aufweisen, tragen entsprechend um 100 höhere Bezugszeichen. Ansonsten stimmen das zweite Ausführungsbeispiel und das erste Ausführungsbeispiel überein. Am Beschlagunterteil, welches sich in Fig. 5 oberhalb der Zeichenebene befindet, ist als ein erstes Zahnelement ein gezahnter Riegel 111 schwimmend gelagert, welcher mit einem am Beschlagoberteil als zweites Zahnelement vorgesehenen Zahnkranz 115 zusammenwirkt.

Am Riegel 111 ist ein Nocken 117 mittels einer Ausdrückung ausgebildet, welcher in Fig. 5 in die Zeichenebene hinein ragt. Ein erstes Spannelement 121, welches am Beschlagunterteil mittels eines ersten Bolzens 123 schwenkbar angelenkt ist, liegt federbelastet mit einer exzentrischen Kontur an dem Nocken 117 auf derjenigen Seite an, welche von der Verzahnung des Riegels 111 abgewandt ist, um den Riegel 111 in Eingriff mit dem Zahnkranz 115 zu halten. Ein erstes Fangelement 126 ist ebenfalls auf dem ersten Bolzen 123 schwenkbar gelagert, durch einen Mitnehmerzapfen und einen Anschlag an das erste Spannelement 121 gekoppelt und gegenüber diesem federbelastet. Im normalen, verriegelten Zustand der Verriegelungsvorrichtung 101 ist das freie Ende des ersten Fangelementes 126, welches auch gestuft sein kann, in geringem Abstand zu demjenigen Ende des Riegels 111 angeordnet, welches von der Verzahnung des Riegels 111 abgewandt ist.

Der Riegel 111 wirkt auf den kreisförmigen Zahnkranz 115 in radialer Richtung ein. Um bei Neigungswinkeln einfallen zu können, die um weniger als eine Zahnbreite von der Zahnteilung des Zahnkranzes 115 abweichen, ist der Riegel 111 schwimmend gelagert, indem die durch Ausdrücken des Nockens 117 entstandene Aufnahme eine aus dem Beschlagunterteil herausgedrückte Insel 105' mit geringerem Querschnitt umschließt. Der Riegel 111 ist daher im Bereich seiner seitlichen Flanken 136, also in tangentialer Richtung bezogen auf den Zahnkranz 115, zu führen und seitlich abzustützen. Hierfür sind an der einen Flanke 136 auf einem zweiten Bolzen 137 ein zweites Spannelement 138 und ein zweites Fangelement 139 gelagert, während an der anderen Flanke 136 auf einem dritten Bolzen 141 ein drittes Spannelement 142 und ein drittes Fangelement 143 gelagert sind.

Das zweite und dritte Spannelement 138 bzw. 142 entsprechen in ihrer Funktion und Wirkungsweise dem ersten Spannelement 121, d.h. sind ebenfalls federbelastet und wirken mit einer exzentrischen Kontur mit dem Nocken 117 zusammen. Das zweite und dritte Fangelement 139 bzw. 143 sind jeweils mit Schlitz-Zapfen-Führungen entsprechend an das zugehörige Spannelement 138 bzw. 142 gekoppelt. Am freien Ende weisen das zweite und dritte Fangelement 139 bzw. 143 mehrere Fangflächen 139' bzw. 143' auf, welche zu dem Bolzen 141 konzentrisch mit gestuften Radien ausgebildet sind. Je nach Lage des Riegels 111 befindet sich jeweils eine der Fangflächen 139' bzw. 143' in unmittelbarer Nähe der zugeordneten Flanke 136 des Riegels 111, so daß sie, entsprechend der Situation im ersten Ausführungsbeispiel, im Crashfall in Anlage aneinander gelangen, ohne daß ein öffnendes Moment übertragen wird.

### Bezugszeichenliste

- 1: Verriegelungsvorrichtung (erstes Ausführungsbeispiel)
- 3: Gelenkbeschlag
- 4: Fahrzeugsitz
- 5: Beschlagunterteil
- 6: Sitzteil
- 7: Beschlagoberteil
- 8: Rückenlehne
- 9: Lehnendrehachse
- 11: Klinke
- 13: erster Bolzen
- 15: Zahnkranz
- 17: Steuerstück
- 21: Spannelement
- 23: zweiter Bolzen
- 27: Spannfläche
- 30: Fangelement
- 31: erste Fangfläche
- 32: zweite Fangfläche
- 33: dritte Fangfläche
- 34: vierte Fangfläche
- 35: fünfte Fangfläche
- 36: Anlagefläche
- R1: erster Abstand
- R2: zweiter Abstand
- R3: dritter Abstand
- R4: vierter Abstand
- 101: Verriegelungsvorrichtung (zweites Ausführungsbeispiel)
- 105': Insel
- 111: Riegel
- 115: Zahnkranz
- 117: Nocken
- 121: erstes Spannelement
- 123: erster Bolzen
- 126: erstes Fangelement
- 136: Flanke
- 137: zweiter Bolzen
- 138: zweites Spannelement
- 139: zweites Fangelement
- 139': Fangfläche (des zweiten Fangelementes)
- 141: dritter Bolzen
- 142: drittes Spannelement
- 143: drittes Fangelement
- 143': Fangfläche (des dritten Fangelementes)

## Patentansprüche

1. Verriegelungsvorrichtung für einen Fahrzeugsitz, insbesondere für einen Fahrzeugsitzeinsteller, die zwischen wenigstens zwei relativ zueinander einstellbaren Einstellerteilen (5, 7) des Fahrzeugsitzeinstellers (3) oder einer Sitzbefestigung wirkt, mit einem ersten Zahnelement (11; 111), welches einem ersten Einstellerteil (5) zugeordnet ist, einem zweiten Zahnelement (15; 115), welches einem zweiten Einstellerteil (7) zugeordnet ist, wenigstens einem Spannelement (21; 121, 138, 142), welches in einem verriegelten Zustand der Verriegelungsvorrichtung (1; 101) die beiden Zahnelemente (11, 15; 111, 115) in Eingriff miteinander hält, und wenigstens einem Fangelement (30; 126, 139, 143), welches mittels wenigstens einer Fangfläche (31, 32, 33, 34; 139', 143') im Crashfall das erste Zahnelement (11; 111) abstützt, **dadurch gekennzeichnet, daß** das Fangelement (30; 126, 139, 143) wenigstens zwei Fangflächen (31, 32, 33, 34; 139', 143') aufweist und im Crashfall genau eine Fangfläche (31, 32, 33, 34; 139', 143') pro Fangelement (30; 139, 143) mit einer Anlagefläche (36; 136) des ersten Zahnelementes (11; 111) zusammenwirkt.

2. Verriegelungsvorrichtung nach Anspruch 1, **dadurch gekennzeichnet, daß** die zwei Fangflächen (31, 32, 33, 34; 139', 143') benachbart zueinander am Fangelement (30; 126, 139, 143) angeordnet sind.

3. Verriegelungsvorrichtung nach Anspruch 1 oder 2, **dadurch gekennzeichnet, daß** die Fangflächen (31, 32, 33, 34; 139', 143') am Fangelement (30; 126, 139, 143) eine konvexe Kontur bilden.

4. Verriegelungsvorrichtung nach einem der Ansprüche 1 bis 3, **dadurch gekennzeichnet, daß** die zwei Fangflächen (31, 32, 33, 34; 139', 143') zu einer Schwenkachse (23; 123, 137. 141) des Fangelementes (30; 126, 139, 143) wenigstens näherungsweise konzentrisch angeordnet sind.

5. Verriegelungsvorrichtung nach einem der Ansprüche 1 bis 4, **dadurch gekennzeichnet, daß** die zwei Fangflächen (31, 32, 33,34; 139', 143') einen unterschiedlichen Abstand (R1, R2, R3, R4) zu einer Schwenkachse (23; 137, 141) des Fangelementes (30; 139, 143) aufweisen.

6. Verriegelungsvorrichtung nach einem der Ansprüche 1 bis 5, **dadurch gekennzeichnet, daß** zwischen den zwei Fangflächen (31, 32, 33, 34; 139', 143') eine Stufe vorgesehen ist.

7. Verriegelungsvorrichtung nach einem der Ansprüche 1 bis 6, **dadurch gekennzeichnet, daß** die Verriegelungsvorrichtung (1; 101) in einem Rastbeschlag (3) mit Neigungseinstellung und Freischwenkfunktion für eine Rückenlehne (8) vorgesehen ist.

8. Fahrzeugsitz, insbesondere Kraftfahrzeugsitz, mit wenigstens einem Fahrzeugsitzeinsteller (3) und/oder einer Sitzbefestigung für den Fahrzeugboden, welcher bzw. welche eine Verriegelungsvorrichtung (1; 101) nach einem der Ansprüche 1 bis 7 aufweist.

## Claims

1. Locking device for a vehicle seat, in particular for a vehicle seat adjuster, which device functions between at least two mutually adjustable adjuster parts (5, 7) of the vehicle seat adjuster (3) or a seat fixing and which has a first toothed element (11; 111) which is associated with a first adjuster part (5), a second toothed element (15; 115) which is associated with a second adjuster part (7), at least one clamping element (21; 121, 138, 142) which retains the two toothed elements (11, 15; 111, 115) in engagement with each other when the locking device (1; 101) is in a locked state, and at least one catch element (30; 126, 139, 143) which supports the first toothed element (11; 111) by means of at least one catch face (31, 32, 33, 34; 139', 143') in the event of a crash, **characterised in that** the catch element (30; 126, 139, 143) has at least two catch faces (31, 32, 33, 34; 139', 143') and, in the event of a crash, precisely one catch face (31, 32, 33, 34; 139', 143') per catch element (30; 139, 143) co-operates with a contact face (36; 136) of the first toothed element (11; 111).

2. Locking device according to claim 1, **characterised in that** the two catch faces (31, 32, 33, 34; 139', 143') are arranged adjacent to each other on the catch element (30; 126, 139, 143).

3. Locking device according to claim 1 or 2, **characterised in that** the catch faces (31, 32, 33, 34; 139' 143') form a convex contour on the catch element (30; 126, 139, 143).

4. Locking device according to any one of claims 1 to 3, **characterised in that** the two catch faces (31, 32, 33, 34; 139', 143') are arranged at least substantially concentrically with a pivot axis (23; 123, 137, 141) of the catch element (30; 126, 139, 143).

5. Locking device according to any one of claims 1 to 4, **characterised in that** the two catch faces (31, 32, 33, 34; 139', 143') have a different spacing (R1, R2, R3, R4) relative to a pivot axis (23; 137, 141) of the catch element (30; 139, 143).

6. Locking device according to any one of claims 1 to 5, **characterised in that** a step is provided between the two catch faces (31, 32, 33, 34; 139', 143').

7. Locking device according to any one of claims 1 to 6, **characterised in that** the locking device (1; 101) is provided in a locking fitting (3) with inclination adjustment and a free pivoting function for a back rest (8).

8. Vehicle seat, in particular a motor vehicle seat, having at least one vehicle seat adjuster (3) and/or a seat fixing for the vehicle floor, which adjuster and/or fixing has a locking device (1; 101) according to any one of claims 1 to 7.

## Revendications

1. Dispositif de verrouillage pour un siège de véhicule, en particulier pour un organe de réglage de siège de véhicule, qui agit entre au moins deux parties (5, 7) de l'organe de réglage de siège de véhicule (3) qui peuvent être réglées l'une part rapport à l'autre, ou d'une fixation de siège, comprenant un premier élément denté (11 ; 111) qui est associé à une première partie (5) de l'organe de réglage, un deuxième élément denté (15 ; 115) qui est associé à une deuxième partie (7) de l'organe de réglage, au moins un élément de serrage (21 ; 121 ; 138, 142) qui , dans un état verrouillé du dispositif de verrouillage (1 ; 101), maintient les deux éléments dentés (11, 15 ; 111, 115) en prise entre eux, et au moins un élément de retenue (30 ; 126, 139, 143) qui soutient le premier élément denté (11 ; 111) en cas d'accident au moyen d'au moins une surface de retenue (31, 32, 33, 34 ; 139', 143'), **caractérisé par le fait que** l'élément de retenue (30 ; 126, 139, 143) présente au moins deux surfaces de retenue (31, 32, 33, 34 ; 139', 143') et, en cas d'accident, précisément une surface de retenue (31, 32, 33, 34 ; 139', 143') par élément de retenue (30 ; 139, 143) coopère avec une surface de contact (36 ; 136) du premier élément denté (11 ; 111).

2. Dispositif de verrouillage selon la revendication 1, **caractérisé par le fait que** les deux surfaces de retenue (31, 32, 33, 34 ; 139', 143') sont voisines l'une de l'autre sur l'élément de retenue (30 ; 126, 139, 143).

3. Dispositif de verrouillage selon l'une des revendications 1 ou 2, **caractérisé par le fait que** les surfaces de retenue (31, 32, 33, 34 ; 139', 143') prévues sur l'élément de retenue (30 ; 126, 139, 143) forment un contour convexe.

4. Dispositif de verrouillage selon l'une des revendications 1 à 3, **caractérisé par le fait que** les deux surfaces de retenue (31, 32, 33, 34 ; 139', 143') sont disposées au moins à peu près concentriquement à un axe de pivotement (23 ; 123, 137, 141) de l'élément de retenue (30 ; 126, 139, 143).

5. Dispositif de verrouillage selon l'une des revendications 1 à 4, **caractérisé par le fait que** les deux surfaces de retenue (31, 32, 33, 34 ; 139', 143') présentent une distance différente (R1, R2, R3, R4) à un axe de pivotement (23 ; 137, 141) de l'élément de retenue (30 ; 139, 143).

6. Dispositif de verrouillage selon l'une des revendications 1 à 5, **caractérisé par le fait qu'**il est prévu un épaulement entre les deux surfaces de retenue (31, 32, 33, 34 ; 139', 143').

7. Dispositif de verrouillage selon l'une des revendications 1 à 6, **caractérisé par le fait que** le dispositif de verrouillage (1 ; 101) est prévu dans une ferrure d'arrêt (3) possédant un réglage d'inclinaison et une fonction de pivotement libre pour un dossier (8).

8. Siège de véhicule, en particulier siège de véhicule automobile, comprenant au moins un organe de réglage de siège de véhicule (3) et/ou une fixation de siège pour un plancher de véhicule qui présente un dispositif de verrouillage (1 ; 101) tel que défini à l'une des revendications 1 à 7.
